# DEMANDE DE BREVET EUROPEEN

(11) **EP 4 726 482 A1**
(43) Date de publication de la demande: **15.04.2026**
(21) Numéro de dépôt: 25208220.1
(22) Date de dépôt: 13.10.2025
(51) Int. Cl.: G05B 17/02, G06F 30/20, G06F 119/18

(54) **PROCÉDÉ DE SYNCHRONISATION D'UN JUMEAU NUMÉRIQUE AVEC UN SYSTÈME PHYSIQUE, ET DISPOSITIF ÉLECTRONIQUE ASSOCIÉ**

(30) Priorité: 14.10.2024 FR 2411092
(71) Demandeur: Orange, 92130 Issy-les-Moulineaux (FR)
(72) Inventeur: HASSAN, Thomas, 92326 Chatillon Cedex (FR); MASSRI, Maria, 92326 Chatillon Cedex (FR)
(74) Mandataire: Cabinet Beau de Loménie

(57) **Abrégé**

L'invention concerne un procédé de synchronisation d'au moins un premier jumeau numérique 310 avec un système physique 100 comprenant : une pluralité de synchronisations du premier jumeau numérique 310 avec le système physique 100, mises en œuvre selon une fréquence de synchronisation variable ; en réponse à une réception d'une requête d'obtention de données du système physique 100 à un instant courant, une synchronisation d'au moins une partie du premier jumeau numérique avec le système physique ; et une réinitialisation de la fréquence de synchronisation de la au moins une partie du premier jumeau numérique à une valeur supérieure à une valeur courante de ladite fréquence de synchronisation.

## Description

### Domaine Technique

La présente invention appartient au domaine général de l'Internet des Objets. Elle concerne plus particulièrement un procédé de synchronisation d'un jumeau numérique avec un système physique. Elle concerne également un dispositif de gestion de jumeaux numériques configuré pour mettre en œuvre un tel procédé.

### Technique antérieure

Un jumeau numérique peut être défini comme une représentation numérique d'un système physique (ou "réel"), qui présente la particularité d'évoluer en fonction des transformations du système auquel il est attaché. La particularité d'un jumeau numérique est de s'appuyer sur un modèle physique qui est alimenté en continu par des données par exemple collectées par des capteurs disposés sur, dans ou à proximité du système, ou issues d'une inspection de ce système à un certain instant.

Ainsi, à la différence d'une modélisation numérique classique, un jumeau numérique est généralement configuré pour fournir, en temps réel, des informations sur l'état actuel de fonctionnement du système physique auquel il est relié, mais également pour simuler un scénario ou anticiper certaines situations au regard du fonctionnement passé de ce système.

Les jumeaux numériques sont une technologie en fort développement et sont de plus en plus utilisés pour le suivi de systèmes complexes - comme les villes, les complexes industriels, les bâtiments, les plates-formes offshores, les éoliennes, les moteurs d'avion, etc. - puisqu'ils permettent de traiter des quantités importantes de données hétérogènes, d'identifier la cause première de problèmes et d'améliorer la productivité de ces systèmes complexes.

Cependant, un jumeau numérique d'un système complexe peut être composé de plusieurs milliers de variables qui reflètent la dynamique de ce système complexe. Autrement dit, à un instant t, ce sont des milliers de variables dont les valeurs peuvent évoluer afin de refléter une évolution du système complexe que ce jumeau numérique représente. Ainsi, plus le système se complexifie, plus il devient difficile d'obtenir un jumeau numérique reflétant tous les changements du système, et *a fortiori,* plus il devient difficile d'utiliser le jumeau numérique pour prédire les performances ou situations futures du système complexe.

En effet, la synchronisation de ces milliers de variables, l'utilisation des données synchronisées pour réaliser de nouvelles prédictions et l'utilisation de ces nouvelles prédictions pour prendre des décisions sont des opérations coûteuses en termes de temps, de bande passante, et de ressources de stockage et/ou de traitement. Par ailleurs, le fait de ne pas synchroniser un jumeau numérique avec le système physique qu'il représente peut conduire à des prédictions inexactes, en particulier dans des contextes très dynamiques.

### Exposé de l'invention

La présente invention a pour objectif de remédier à tout ou partie des inconvénients de l'art antérieur, notamment ceux exposés ci-avant, en proposant une solution qui considère à la fois les coûts liés à la synchronisation d'une quantité (potentiellement importante) de données et au traitement de ces données, tout en veillant à aider à maintenir la qualité des prédictions fournies par le jumeau numérique.

À cet effet, et selon un premier aspect, l'invention concerne un procédé de synchronisation d'un jumeau numérique représentant au moins une partie d'un système physique, le procédé étant mis en œuvre par un dispositif de gestion de jumeaux numériques et comprenant :
- une pluralité de synchronisations du premier jumeau numérique avec le système physique, mises en œuvre selon au moins une fréquence de synchronisation variable ;
- en réponse à une réception d'une requête d'obtention de données du système physique à un instant courant, une synchronisation d'au moins une partie du premier jumeau numérique avec le système physique ; et une réinitialisation de la fréquence de synchronisation de la au moins une partie du premier jumeau numérique synchronisée à une valeur, dite "valeur de réinitialisation", supérieure à une valeur courante de ladite fréquence de synchronisation.

Ce procédé selon l'invention est avantageux puisqu'il aide d'une part à réduire la fréquence des synchronisations - et donc *a fortiori* à limiter la quantité de données échangées entre le système physique et son jumeau (e.g., le premier jumeau), puis traitées par ce jumeau - et d'autre part à renforcer la fréquence des synchronisations des parties du jumeau qui sont par exemple requises par un utilisateur du dispositif de gestion, et qui présentent donc un certain intérêt pour cet utilisateur.

Comme évoqué précédemment, un jumeau numérique (ou "digital twin" selon la terminologie anglo-saxonne) correspond à une représentation numérique et dynamique d'un système physique. Un jumeau numérique s'appuie sur un modèle physique qui est alimenté en continu par des données collectées en temps réel et offre une multitude d'applications et de bénéfices, notamment dans l'optimisation d'opérations, la réduction de coûts, l'amélioration de la productivité et/ou l'augmentation de la sécurité.

Dans certains modes de mise en œuvre, ce modèle physique est formalisé sous la forme d'un graphe dont les nœuds représentent des éléments du système physique, et dont les arcs représentent les relations sémantiques (par exemple topologiques, spatiales) entre ces éléments. Ce modèle comprend par ailleurs des propriétés associées au modèle physique lui-même, aux nœuds et/ou aux arcs.

Par "système physique", on entend tout objet ou élément, ensemble d'objets ou d'éléments et/ou environnement composé d'objets ou d'éléments. Il s'agit par exemple d'une ville, d'un complexe industriel, d'un bâtiment, d'une plate-forme offshore, d'une éolienne, d'un moteur d'avion, d'une partie du corps humain, etc.

Il importe de noter que tout ou partie de ce système physique est représenté par ce premier jumeau numérique. Autrement dit, ce système physique est représenté au moins partiellement par le premier jumeau numérique.

La requête d'obtention est par exemple émise par un utilisateur du dispositif de gestion de jumeaux numériques. En variante, cette requête d'obtention est émise automatiquement par le dispositif de gestion de jumeaux numériques, par exemple en réponse à la détection d'un évènement par exemple inhabituel ou en réponse à une certaine prédiction.

Comme évoqué précédemment, la synchronisation du premier jumeau numérique avec le système physique en réponse à la réception de la requête d'obtention peut correspondre à la synchronisation de tout ou partie du jumeau numérique. Lorsque cette synchronisation n'est que partielle, elle se rapporte par exemple :
- à la synchronisation d'une partie du premier jumeau numérique représentative d'une partie du système physique. Ainsi, si le système physique correspond à une usine de fabrication automobile, et si la requête d'obtention ne vise qu'une ligne de production spécifique de cette usine, seule la partie du jumeau représentative cette ligne de production spécifique est synchronisée ; ou,
- à la synchronisation d'une ou plusieurs propriétés (ou attributs) du premier jumeau numérique ou des éléments qui le composent. Ainsi, si la requête d'obtention ne concerne que les valeurs de la propriété "température ambiante", seules les valeurs de cette propriété sont alors synchronisées.
- ou à une synchronisation d'une ou plusieurs propriétés d'une partie du jumeau numérique, ce dernier cas correspondant à la combinaison des deux cas précédemment évoqués. Ainsi, si la requête d'obtention ne concerne que les valeurs de la propriété "température ambiante" de robots situés au sein d'une ligne de production spécifique, seules ces dernières sont synchronisées.

De manière générale, on considère que les étapes d'un procédé ne doivent pas être interprétées comme étant liées à une notion de succession temporelle.

Dans certains modes de mise en œuvre, le procédé de synchronisation peut comporter en outre l'une ou plusieurs des caractéristiques suivantes, prises isolément ou selon toutes les combinaisons techniquement possibles.

Dans certains modes de mise en œuvre, la pluralité de synchronisations du premier jumeau numérique avec le système physique est mise en œuvre en réduisant progressivement une valeur initiale de la fréquence de synchronisation.

Dans certains modes de mise en œuvre, la fréquence de synchronisation est réinitialisée à une valeur de réinitialisation distincte de la valeur initiale. En variante, la valeur de réinitialisation et la valeur initiale correspondent à une même et unique valeur.

Dans certains modes de mise en œuvre, la fréquence de synchronisation est progressivement réduite par application d'une fonction de décroissance.

Dans certains modes de mise en œuvre, le premier jumeau numérique comprend un modèle de prédiction, et la fréquence de synchronisation est progressivement réduite en fonction d'une précision effective du modèle de prédiction.

Dans certains modes de mise en œuvre, la fréquence de synchronisation est progressivement réduite tant que la précision effective du modèle de prédiction est adaptée.

Par "adaptée", on entend par exemple que cette précision effective est supérieure à une valeur seuil. Ainsi, tant que la précision effective du modèle de prédiction est supérieure à cette valeur seuil à atteindre, alors la fréquence de synchronisation est réduite.

Dans certains modes de mise en œuvre, où seule une partie *P_{SYNC}* du premier jumeau numérique est synchronisée en réponse à la réception de la requête d'obtention de données, le procédé comprendre en outre, une réinitialisation de la fréquence de synchronisation pour la partie *P_{SYNC}* (en fonction de la fréquence réinitialisée *F_{INIT}*,) et la fréquence de synchronisation du jumeau numérique, à l'exclusion de la partie *P_{SYNC},* n'étant pas réinitialisée et continuant à varier comme indiqué ci-avant, en fonction de la valeur courante de la fréquence de synchronisation.

Dans certains modes de mise en œuvre, le premier jumeau numérique comprend un modèle de prédiction, et le procédé comprend en outre:
- une génération d'un historique d'états du système physique, chaque état de l'historique étant associé à un instant t et incluant des valeurs de différentes variables dynamiques du système physique audit instant t ; et,
- un entraînement du modèle de prédiction en utilisant l'historique d'états comme données d'entraînement.

Dans certains modes de mise en œuvre, le procédé de synchronisation comprend :
- sur réception d'une requête d'obtention de données du système physique relatives à un instant antérieur à l'instant courant,
- une prédiction, par le modèle de prédiction, de données associées à l'instant antérieur en fonction d'au moins un état de l'historique lorsque l'historique d'états ne comprend pas d'état associé à l'instant antérieur.

Dans certains modes de mise en œuvre, le procédé de synchronisation comprend en outre un enregistrement des données prédites à l'instant antérieur dans l'historique d'états du système physique.

Dans certains modes de mise en œuvre, le procédé comprend en outre une détermination de ladite au moins au moins une partie du premier jumeau numérique à synchroniser avec le système physique, en fonction de la requête d'obtention de données.

Dans certains modes de mise en œuvre, le procédé de synchronisation comprend en outre un stockage, dans l'historique d'états, des données issues de la synchronisation de la au moins une partie du premier jumeau numérique avec le système physique en association avec l'instant courant.

Dans certains modes de mise en œuvre, le procédé de synchronisation comprend en outre un accès, par un module de rendu, aux données issues de la synchronisation de la au moins une partie du premier jumeau numérique avec le système physique.

Dans certains modes de mise en œuvre, le procédé de synchronisation comprend en outre un filtrage des données issues de la synchronisation de la au moins une partie du premier jumeau numérique avec le système physique.

Dans certains modes de mise en œuvre, la pluralité de synchronisations est réalisée directement entre le premier jumeau numérique et le système physique. En variante, la pluralité de synchronisations est réalisée via un second jumeau numérique représentant au moins partiellement le système physique.

Comme évoqué précédemment, les caractéristiques précédemment évoquées peuvent être considérées isolément ou selon toutes les combinaisons techniquement possibles.

Selon un deuxième aspect, l'invention concerne un dispositif de gestion de jumeaux numériques configuré pour mettre en œuvre un procédé de synchronisation selon l'invention dans l'un quelconque de ses modes de mise en œuvre.

Selon un troisième aspect, l'invention concerne un programme d'ordinateur comportant des instructions pour la mise en œuvre d'un procédé de synchronisation, dans l'un quelconque de ses modes de mise en œuvre, lorsque ledit programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un quatrième aspect, l'invention concerne un support d'enregistrement lisible par un ordinateur sur lequel est enregistré le programme d'ordinateur selon l'invention dans l'un quelconque de ses modes de mise en œuvre.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig.1] la figure 1 est une représentation d'un exemple d'environnement dans lequel l'invention est mise en œuvre ;
[Fig.2] la figure 2 représente des modules embarqués dans un dispositif de gestion de jumeaux numériques, selon un exemple de mise en œuvre de l'invention ;
[Fig.3] la figure 3 représente schématiquement un exemple d'architecture matérielle d'un dispositif de gestion de jumeaux numériques ;
[Fig.4] la figure 4 représente, sous forme d'ordinogramme, certains modes de mise en œuvre d'un procédé de synchronisation, par exemple exécuté par le dispositif de gestion de jumeaux numériques des figures 2 et 3 ; et,
[Fig.5] la figure 5 est une représentation d'un exemple d'environnement dans lequel l'invention est mise en œuvre.

### Description des modes de réalisation

Les termes "premier(s)" (ou première(s)), "deuxième(s)", etc. sont utilisés dans ce document par convention arbitraire pour permettre d'identifier et de distinguer différents éléments (tels que des messages, des dispositifs, des jumeaux numériques, etc.) considérés dans les modes de réalisation décrits ci-après, et n'impliquent pas de séquençage particulier, sauf lorsque cela est explicitement indiqué.

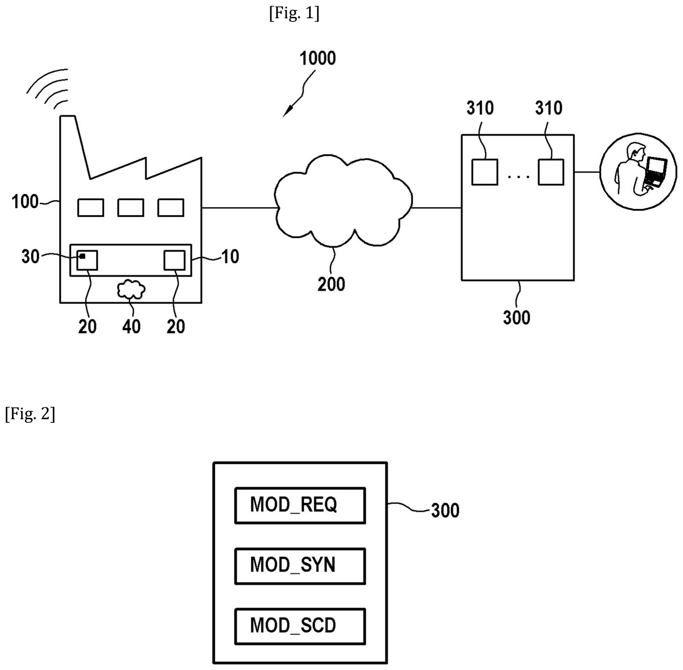

La figure 1 est une représentation d'un exemple d'environnement 1000, dans lequel l'invention est mise en œuvre.

Tel qu'illustré par la figure 1, cet environnement 1000 comprend un système physique. Ce système correspond, dans cet exemple, à une usine 100 de fabrication de véhicules, et comprend une ligne de production (par exemple de montage) 10. Cette ligne de production comprend un ensemble de postes de travail spécialisés constitués de robots industriels 20 disposés dans un ordre préétabli correspondant à la succession des opérations d'assemblage des composants d'un véhicule. Chaque robot 20 est lui-même équipé d'un ou plusieurs capteurs 30. Ces capteurs correspondent par exemple à :
- un capteur de vision 2D, par exemple pour permettre la détection d'objets en mouvement ou la recherche d'articles sur un tapis roulant. Le robot peut alors ajuster son mouvement de manière appropriée, en fonction des informations reçues ;
- un capteur de vision 3D ;
- un capteur de positionnement, tel qu'un système de positionnement global (ou "Global Positioning System", GPS, selon la terminologie anglo-saxonne) ;
- un capteur gyroscopique, par exemple pour permettre au robot de maintenir une certaine orientation ;
- un capteur de son, par exemple configuré pour évaluer l'amplitude des sons dans l'environnement du robot par rapport à une valeur seuil ;
- un capteur de proximité configuré pour détecter un objet proche, et ce, sans contact physique avec cet objet, de sorte à permettre au robot d'éviter une collision ;
- un capteur tactile (ou "capteur de contact") ;
- un capteur de force, configuré pour évaluer une force physique (e.g., un poids, une tension, une compression ou une pression) ; et/ou
- un capteur de température.

La ligne de production 10 et/ou l'usine 100 peuvent également être équipées de capteur(s) 30, tels que des capteurs de détection de mouvement, des caméras, des capteurs de température, des capteurs de détection de fumée, etc.

Dans le présent exemple, et à des fins de simplification de la description, il est considéré que l'usine 100 ne comprend qu'une seule ligne de production 10. Il convient cependant de noter qu'aucune limitation n'est attachée au nombre de lignes de production, au nombre de robots qui composent cette ou ces lignes de production 10, et/ou aux types de capteurs considérés. Les développements qui suivent sont en effet généralisables sans difficulté par l'homme du métier.

Cette usine 100 de fabrication de véhicules est connectée à un dispositif 300 de gestion de jumeaux numériques au travers d'un réseau de télécommunication 200. Il convient de noter qu'aucune hypothèse n'est faite quant à la nature de ce réseau. Il s'agit par exemple d'un réseau local (par exemple "Local Area Network", LAN ou "Wireless LAN", WLAN), d'un réseau étendu tel que l'Internet, d'un réseau de téléphonie mobile (par exemple un réseau de cinquième génération (5G) ou de génération supérieure (B5G, acronyme de "Beyond fifth Generation"), ou d'une combinaison de ces différents types de réseaux.

Cette usine 100 de fabrication comprend également un réseau local 40. Aucune hypothèse n'est faite quant à la nature de ce réseau.

Une "plateforme de gestion de jumeaux numériques" est installée sur ce dispositif 300 de gestion de jumeaux numériques, qui héberge un ou plusieurs jumeaux numériques 310.

Par la suite, les modes de réalisation détaillés sont décrits, à titre d'exemple, en considérant la présence d'un seul jumeau numérique. Il convient toutefois de noter que le nombre de jumeaux numériques ne constitue pas une limitation de l'invention, et rien n'exclut d'envisager un nombre de jumeaux numériques supérieur à un, par exemple lorsque plusieurs systèmes physiques sont considérés et/ou lorsque plusieurs éléments d'un même système physique sont représentés par plusieurs jumeaux numériques.

Cette plateforme de gestion de jumeaux numériques, utilisée par exemple dans le cadre de l'organisation ou de l'optimisation de cette usine 100 de fabrication de véhicules, est par exemple configurée pour :
- analyser, en temps réel, les données issues de capteurs associés à un ou plusieurs systèmes physiques (par exemple, détecter une situation anormale comme un défaut dans une pièce à partir d'images capturées par les capteurs de vision 2D ou 3D) ;
- prédire le comportement de l'usine 100 de fabrication de véhicules dans sa globalité ou d'un ou plusieurs éléments de cette usine 100 (par exemple, prédire le comportement d'un robot 20, et/ou prédire l'usure d'une pièce afin d'améliorer la planification de la maintenance) ;
- simuler un scénario préétabli (par exemple, simuler une panne dans cette usine de fabrication 100 de véhicules ainsi que ses conséquences, ou simuler un nouveau processus de fabrication) ;
- évaluer les causes d'un comportement spécifique (inhabituel par exemple) d'un ou plusieurs éléments de l'usine 100 de fabrication de véhicules, ou de l'usine 100 dans sa globalité, par exemple à partir de l'analyse d'un historique d'état du système physique ; et/ou
- offrir, à un utilisateur, une représentation synthétique de l'usine 100 de fabrication de véhicules dans sa globalité et/ou d'un ou plusieurs éléments de cette usine 100.

Pour ce faire, plateforme de gestion de jumeaux numériques héberge un jumeau numérique attaché à tout ou partie du système physique 100. Autrement dit, le système physique 100 est représenté au moins partiellement par un jumeau numérique.

Le dispositif 300 de gestion de jumeaux numérique peut par exemple être associé à une base de données (locale ou distante) dans laquelle sont stockées les données relatives au jumeau numérique hébergé. Cette base de données est par exemple configurée pour stocker :
- un modèle de données associé au jumeau numérique ;
- des données collectées en continu par les capteurs 30 équipant l'usine 100 (et/ou les éléments qui la composent) et reçues par le dispositif de gestion de jumeaux 300, ces données étant utilisées pour mettre à jour le modèle de données précédemment évoqué ;
- des métadonnées associées au jumeau. Ces métadonnées comprennent par exemple la date de création de ce jumeau, la date de dernière mise à jour, la date d'expiration, le propriétaire ou le gestionnaire de ce jumeau, un indicateur de visibilité et/ou de confidentialité ;
- et éventuellement, lorsque la plateforme héberge plusieurs jumeaux numériques 310, des données représentatives des relations entre ces jumeaux numériques.

La figure 2 représente des modules embarqués dans un dispositif 300 de gestion de jumeaux numériques, selon un exemple de mise en œuvre de l'invention.

Tel qu'illustré par la figure 2, le dispositif 300 de gestion de jumeaux numériques comprend :
- un module MOD_REQ de réception d'une requête d'obtention de données du système physique à un instant courant *t_{CUR}* ;
- un module MOD_SYN de synchronisation configuré pour synchroniser le jumeau numérique 310 avec le système physique 100 ;
- un module MOD_SCD d'ordonnancement configuré pour ajuster la fréquence de synchronisation du jumeau numérique 310 avec le système physique 100. Comme évoqué plus en détail ci-après, dans certains modes de mise en œuvre, ce module MOD_SCD d'ordonnancement est configuré pour réduire progressivement une fréquence de synchronisation dudit jumeau numérique 310 avec ledit système physique 100, mais également pour réinitialiser la fréquence de synchronisation à une valeur de réinitialisation, en réponse à une instruction reçue du module MOD_REQ de réception d'une requête.

Leurs fonctionnalités sont décrites plus en détail ci-après en référence à différents modes de mise en œuvre.

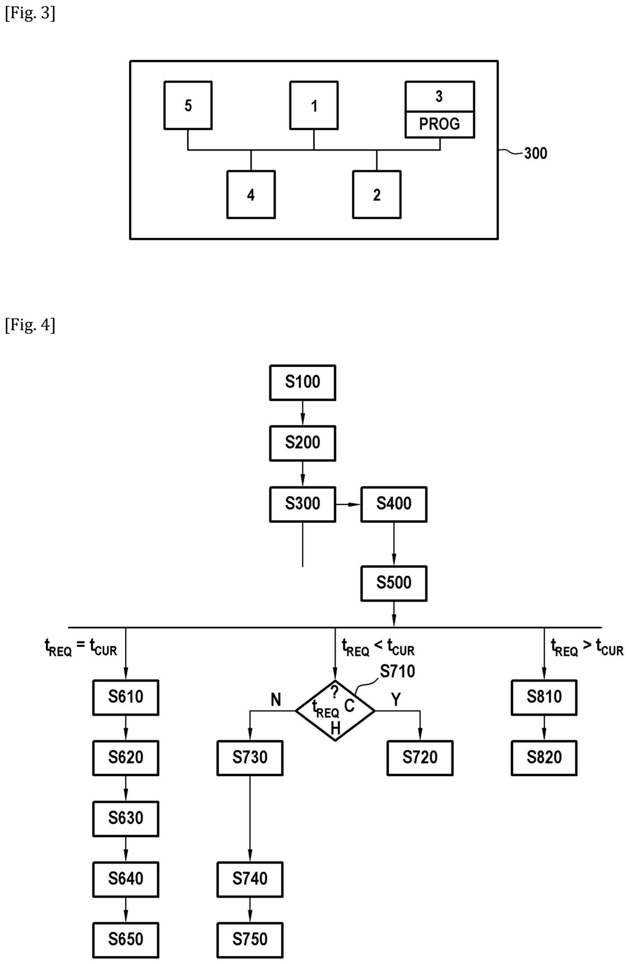

La figure 3 représente schématiquement un exemple d'architecture matérielle d'un dispositif 300 de gestion de jumeaux numériques 310.

Tel qu'illustré par la figure 3, le dispositif 300 de gestion de jumeaux numériques dispose de l'architecture matérielle d'un ordinateur. Ainsi, le dispositif 300 de gestion de jumeaux numériques comporte, notamment, un processeur 1, une mémoire vive 2, une mémoire morte 3 et une mémoire non volatile 4. Il dispose en outre de moyens de communication 5.

La mémoire morte 3 du dispositif 300 de gestion de jumeaux numériques constitue un support d'enregistrement conforme à l'invention, lisible par le processeur 1 et sur lequel est enregistré un programme d'ordinateur PROG conforme à l'invention, comportant des instructions pour l'exécution d'étapes du procédé de synchronisation selon l'invention. Le programme PROG définit des modules fonctionnels du dispositif 300 de gestion de jumeaux numériques, qui s'appuient ou commandent les éléments matériels 1 à 5 du dispositif 300 de gestion de jumeaux numériques cités précédemment. Ces modules fonctionnels sont illustrés sur la figure 2 à titre nullement limitatif, et sont décrits plus en détails ci-après en référence à différents modes de mise en œuvre.

Dans les modes de mise en œuvre décrits ci-après, les moyens de communication 5 permettent notamment au dispositif 300 de gestion de jumeaux numériques d'obtenir des données générées par des capteurs connectés au système physique 100. À cet effet, les moyens de communication 5 comportent une interface de communication, filaire ou non filaire, apte à mettre en œuvre tout protocole de communication adapté.

Dans certains modes de mise en œuvre, le dispositif 300 de gestion de jumeaux numériques comprend, et/ ou est en outre connecté à une interface homme-machine, IHM, permettant d'offrir, à un utilisateur, une représentation synthétique de tout ou partie du système physique à piloter. Cette IHM peut également permettre à un utilisateur de demander une prédiction du comportement du système physique ; de lancer une simulation d'un scénario préétabli ; et/ou de lancer une évaluation des causes d'un comportement spécifique du système physique.

Dans certains modes de mise en œuvre, le jumeau numérique 310 comprend un modèle de prédiction qui est par exemple stocké en mémoire non volatile 4 du dispositif 300 de gestion de jumeaux numériques.

La figure 4 représente, sous forme d'ordinogramme, certains modes de mise en œuvre d'un procédé de synchronisation, par exemple exécuté par le dispositif 300 de gestion de jumeaux numériques des figures 2 et 3.

Tel qu'illustré par la figure 4, le procédé de synchronisation comprend une première étape S100 d'obtention d'un historique d'états *H =* {*S*₁*, S*₂, *..., S_{T}*} du système physique 100. Selon certains modes de mise en œuvre, l'historique d'états est généré par le dispositif 300 de gestion de jumeaux numériques lui-même, et cette étape S100 d'obtention d'un historique d'états correspond alors à une étape de génération de l'historique d'états Hdu système physique 100. En variante, l'historique est généré par un dispositif distinct du dispositif 300 de gestion de jumeaux numériques, et cette étape S100 d'obtention d'un historique d'états correspond à une réception de l'historique d'états *H.* Chaque état de l'historique *H* correspond à une synchronisation entre le jumeau numérique et tout ou partie du système physique, ou au résultat d'une prédiction de l'état de tout ou partie du système physique à un instant antérieur à l'instant courant.

Chaque état de l'historique est notamment composé de propriétés dont les valeurs sont dynamiques et qui reflètent l'évolution du comportement et/ou de l'état du système physique 100 au cours du temps. Ces valeurs sont typiquement transmises par différents capteurs installés dans, sur, ou à proximité du système physique, tels que les capteurs 30 précédemment évoqués en référence à la Figure 1.

Selon certains modes de mise en œuvre, au cours d'une synchronisation, l'ensemble du système physique 100 est synchronisé. En variante, seule une partie du système physique 100 est synchronisée.

Selon certains modes de mise en œuvre, toutes les propriétés sont synchronisées. En variante, seules certaines propriétés sont synchronisées. Autrement dit, lors de la génération de cet historique H, les propriétés *p*₁, *p*₂ et *p*₃ peuvent être synchronisées au cours de l'instant *t*₁, et les propriétés *p*₁, *p*₃, *p*₄ et *p*₅ au cours de l'instant *t*₂.

Chaque état peut également être composé de métadonnées qui caractérisent ce système physique ou certains éléments de ce système physique. Ces métadonnées correspondent par exemple à un nom, un identifiant, une marque, un constructeur, une adresse et/ou une localisation.

Chaque état est enregistré avec un horodatage représentatif du moment où les données ont été synchronisées. L'horodatage comme les données d'état peuvent être "sérialisés", c'est-à-dire convertis dans un format semi-structuré (tel que JSON). L'horodatage peut être sérialisé, par exemple en utilisant une estampille temporelle Unix ou en suivant la norme ISO 8601, tandis que les données d'état peuvent par exemple être sérialisées sous la forme d'une ou plusieurs valeurs JSON, en suivant la norme RFC8259. Dans ce cas, chaque état *S*₁ *S*₂, *...,Sₜ* est constitué d'un des types de valeurs JSON de base : "objet, tableau, nombre, chaîne de caractères, ou d'une des valeurs "faux, vrai, nul".

Dans l'exemple suivant, on considère le jumeau numérique d'un robot 20 à pince agrippeuse. L'historique *H* est constitué de deux états *S*₁, *S*₂ et l'état *S*₁ s'exprime comme suit :

```
 {
 "id": "90363aff-7eba-4b97-8a17-527907c939ca",
 "timestamp": "2024-02-26T14:26:57.101Z",
 "temperature": 24.0,
 "force": 45.2,
 "distance": 0.8
 }
```

ou "force" correspond à la force exercée par la pince en Newtons, et "distance" à une distance par rapport à l'objet le plus proche du robot 20. L'état *S*₂ s'exprime comme suit :

```
{
 "id": "90363aff-7eba-4b97-8a17-527907c939ca",
 "timestamp": "2024-02-26T15:26:57.101Z",
 "temperature": 24.8,
 "force": 47.9,
 "distance": 0.7
 }
```

Bien entendu, d'autres formats structurés ou semi-structurés peuvent être envisagés pour sérialiser ces états, tel que le XML (acronyme de "Extensible Markup Language") ou le CVS (acronyme de "Comma-Separated Values").

Le procédé de synchronisation comprend en outre une étape S200 d'entraînement d'un modèle de prédiction du jumeau numérique 310, en utilisant l'historique H d'états obtenu au cours de l'étape S100.

Dans certains modes de mise en œuvre, ce modèle est configuré pour prédire des données manquantes à un instant antérieur *t_{PASS}* à l'instant courant *t_{CUR}.* En variante ou en complément, ce modèle est par exemple configuré pour prédire le comportement du système physique 100 et/ou pour simuler un scénario préétabli.

Dans certains modes de mise en œuvre, le modèle de prédiction est par exemple implémenté sous la forme de réseaux de neurones (convolution, perceptron, auto-encodeur, récurrent, etc.). Selon certaines implémentations, les réseaux de neurones considérés sont par exemple des réseaux de neurones récurrents de type "longue mémoire à court terme" ("Long Short-Term Memory", LSTM, selon la terminologie anglo-saxonne).

Par ailleurs, il importe de noter qu'aucune limitation n'est attachée au type de technique d'entraînement utilisée pour obtenir ce modèle de prédiction. N'importe quelle technique implémentant un algorithme d'apprentissage ("machine learning" selon la terminologie anglo-saxonne) et fournissant, en sortie, une donnée manquante à un instant antérieur et/ou une prédiction selon le mode de réalisation considéré, compte tenu d'un historique d'états H correspondant à des données d'entrée, peut être considérée dans le contexte de l'invention (par exemple, machine à vecteurs de support, régression logistique, etc.). Autrement dit, le modèle de prédiction est indépendant de la méthode d'entraînement considérée pour entraîner ce modèle.

En outre, les critères d'entraînement peuvent varier selon les modes de mises en œuvre lors de la phase d'entraînement de ce modèle de prédiction. Par exemple, un critère d'entraînement tel que la méthode des moindres carrés ou la minimisation de l'entropie croisée peut être utilisé.

Cet entraînement S200 est optionnel dans certains modes de mises en œuvre, par exemple lorsque le procédé utilise un modèle préalablement entraîné ou ne nécessitant pas d'entraînement.

Le procédé de synchronisation comprend en outre une étape S300 de synchronisation du jumeau numérique avec le système physique, au cours de laquelle tout ou partie du jumeau numérique est synchronisé avec le système physique, et ce, en adaptant une fréquence de synchronisation variable. Cette étape S300 de synchronisation du jumeau numérique avec le système physique est par exemple mise en œuvre par le module MOD_SYN du dispositif 300 de gestion de jumeaux numériques, en réponse à une instruction reçue du module MOD_SCD de ce dispositif.

Dans certains modes de mise en œuvre, cette synchronisation est réalisée en réduisant progressivement la fréquence de synchronisation dudit jumeau numérique avec ledit système physique.

La valeur de fréquence de synchronisation utilisée lors du lancement du procédé (fréquence « initiale » *f*₀ ) est soit prédéterminée (par exemple prédéterminée par un administrateur de la plateforme de gestion des jumeaux numériques, soit configurée en fonction de préférences utilisateur et/ou de l'application envisagée), soit choisie dynamiquement, automatiquement ou manuellement lors du lancement du procédé. Ainsi, dans certains modes de mise en œuvre, si le jumeau numérique est utilisé pour monitorer, en temps réel, la production d'un système industriel, une valeur initiale *f*₀ de 2 à 8 Hz est envisageable.

Selon au moins certains modes de mise en œuvre de l'étape S300 de synchronisation du jumeau numérique avec le système physique, la fréquence de synchronisation est progressivement réduite. La variation peut être automatique, par exemple par application d'une fonction *f_{DEC}* de décroissance ("decay function" selon la terminologie anglo-saxonne).

Selon un autre mode de mise en œuvre de l'étape S300 de synchronisation du jumeau numérique avec le système physique, la fréquence de synchronisation peut varier de façon itérative, en fonction d'un résultat d'une comparaison entre une précision effective du modèle de prédiction et une première valeur de précision (utilisée comme seuil).

Par exemple, à chaque synchronisation (ou en variante après un nombre constant de synchronisations), la précision effective du modèle de prédiction peut être évaluée, par exemple en utilisant l'erreur quadratique moyenne ("Mean Squared Error", MSE, selon la terminologie anglo-saxonne) ou la racine de l'écart quadratique moyen ("Root Mean Square Error", RMSE, selon la terminologie anglo-saxonne). Puis la précision effective est comparée à la première valeur (« seuil ») de précision : si la précision effective est supérieure à cette première valeur de précision, alors la fréquence de synchronisation appliquée est réduite d'une première valeur, (comme 0,0015 Hz en référence à l'exemple ci-avant) ou d'un premier pourcentage. En revanche, si la précision effective est inférieure à la première valeur de précision est atteinte, alors la fréquence de synchronisation appliquée est augmentée d'une seconde valeur (comme 0,002 Hz en référence à l'exemple ci-avant) ou d'un second pourcentage.

Le procédé de synchronisation comprend en outre une étape S400 de réception d'une requête d'obtention de données représentatives de l'état du système physique à un instant *t_{REQ}.* Il peut s'agir d'un instant passé ou futur, ou de l'instant courant. Cette étape est par exemple mise en œuvre par le module MOD_REQ du dispositif 300 de gestion de jumeaux numériques. Dans certains modes de mise en œuvre, cette requête d'obtention de données est émise par un utilisateur du dispositif de gestion de jumeaux numériques. En variante, cette requête d'obtention de données est émise automatiquement par le dispositif de gestion de jumeaux numériques, par exemple en réponse à la détection d'un évènement inhabituel, en réponse à une certaine prédiction, et/ou en réponse à une simulation d'un scénario préétabli.

Lors d'une étape S500, le dispositif 300 de gestion de jumeaux numériques compare l'instant *t_{REQ}* spécifié dans la requête reçue avec l'instant courant *t_{CUR}.* De manière plus précise, il détermine si l'instant *t_{REQ}* spécifié dans la requête reçue lors de l'étape S400 de réception d'une requête d'obtention de données correspond à l'instant courant *t_{CUR},* à un instant passé *t_{PASS}* (antérieur à l'instant courant), ou à un instant futur (postérieur à l'instant courant).

Comme évoqué plus en détail ci-après, différentes étapes sont mises en œuvre selon que l'instant *t_{REQ}* spécifié dans la requête correspond à l'instant courant *t_{CUR}* ou pas. Si l'instant *t_{REQ}* correspond à l'instant courant *t_{CUR}* (choix *"t_{REQ}* = *t_{CUR}*")*,* les étapes référencées S610, S620, S630, S640 et S650 (exposées ci-après) sont mises en œuvre.

Au cours de l'étape S610 d'identification d'au moins une partie du jumeau à synchroniser, au moins une partie du jumeau à synchroniser est identifiée en fonction du contenu de la requête reçue lors de l'étape S400.

Selon certains modes de mise en œuvre, l'ensemble du jumeau numérique est identifié comme devant être synchronisé.

Selon d'autres modes de mise en œuvre, seule une partie du jumeau numérique, par exemple identifiée dans la requête par un identifiant ("ID"), une classe ou un domaine d'application, est identifiée comme devant être synchronisée. Ainsi, si la requête ne vise par exemple à obtenir que les données relatives à une ligne de production spécifique de cette usine, seule la partie du jumeau représentative cette ligne de production spécifique est synchronisée.

Selon certains modes de mise en œuvre, un système physique est représenté par plusieurs jumeaux numériques pouvant être liés entre eux par des relations sémantiques. Ainsi, en référence à l'exemple illustré par la Figure 1, chaque robot industriel 20 est par exemple représenté par un jumeau numérique (dit "troisième jumeau"), la ligne de production est elle-même représentée par un jumeau numérique (dit "quatrième jumeau" , les troisièmes jumeaux étant lié quatrième jumeau par la relation topologique "est une partie de"), le réseau local 40 au sein de cette usine est représenté par un jumeau numérique (dit "cinquième jumeau" lié aux troisièmes et quatrième jumeaux) et l'usine 100 de fabrication est elle-même représentée par un jumeau numérique incluant les troisièmes, quatrième, cinquième jumeaux numériques.

Dans l'exemple précédemment évoqué, puisque la requête ne vise qu'à obtenir les données relatives à une ligne de production spécifique de cette usine, seul le quatrième jumeau numérique représentatif de cette ligne de production est synchronisé. En revanche, le jumeau représentatif du réseau local 40 au sein de l'usine n'est quant à lui pas resynchronisé.

Selon un autre mode de mise en œuvre, seules les propriétés d'un jumeau numérique ou des éléments qui le composent sont synchronisées.

Le procédé comprend en outre une étape S620 au cours de laquelle la au moins une partie du jumeau à synchroniser identifiée lors de l'étape S610 d'identification est synchronisée avec le système physique 100. Cette étape est par exemple mise en œuvre par le module MOD_SYN du dispositif 300 de gestion de jumeaux numériques.

Le procédé de synchronisation comprend en outre une étape S630 de réinitialisation de la fréquence de synchronisation à une valeur de réinitialisation supérieure à la valeur courante de fréquence de synchronisation. Cette valeur de réinitialisation correspond par exemple -mais pas nécessairement - à la valeur initiale *f*₀ précédemment évoquée.

Autrement dit, dans les modes de mise en œuvre au cours desquels la fréquence de synchronisation du jumeau a été graduellement réduite au cours des différentes synchronisations de l'étape S300, cette fréquence de synchronisation est de nouveau augmentée. Cette étape S630 de réinitialisation de la fréquence de synchronisation est avantageuse puisqu'elle permet de renforcer la fréquence des synchronisations des parties du jumeau qui sont par exemple requises par un utilisateur du dispositif de gestion (ou par le dispositif de gestion lui-même), et qui présentent donc un certain intérêt pour cet utilisateur (ou pour le dispositif de gestion lui-même). L'étape S630 de réinitialisation de la fréquence de synchronisation est par exemple initiée et/ou contrôlée par le module MOD_SCD de ce dispositif.

On note que si seule une partie du jumeau numérique a été synchronisée au cours de l'étape de synchronisation S620, il en résulte un jumeau numérique, tel que le jumeau numérique représentatif de l'usine 100 de fabrication, ayant des parties synchronisées à différentes fréquences de synchronisation.

Le procédé comprend en outre une étape S640 de stockage des données synchronisées dans l'historique H en association avec l'instant courant *t_{CUR}.*

Enfin, une étape S650 de traitement est mise en œuvre au cours de laquelle les données synchronisées sont traitées. Selon certains modes de mise en œuvre, ce traitement comprend un "rendu" (c'est-à-dire un affichage ou une restitution audio par exemple) de tout ou partie des données synchronisées. Dans le cas où le rendu est visuel, le dispositif de gestion de jumeaux numériques est par exemple connecté à une interface graphique permettant un affichage des données générées. L'utilisation d'une interface graphique permettant un affichage des données ne constitue bien entendu qu'un exemple d'implémentation, et toute interface associée au dispositif de gestion de jumeaux numériques permettant à un utilisateur d'accéder aux données générées - et ceci quelle que soit la modalité d'accès considérée - peut être envisagée.

Selon certains modes de mise en œuvre, ce traitement comprend une analyse des données générées, par exemple en vue de prédire le comportement du système physique représenté, de simuler un scénario préétabli ou d'évaluer les causes d'un comportement spécifique du système physique.

Lors de l'étape S500 de comparaison de l'instant *t_{REQ}* avec l'instant courant *t_{CUR},* si l'instant *t_{REQ}* correspond à un instant passé *t_{PASS}* (étape S500, choix *"t_{REQ} < t_{CUR}*")*,* les étapes S710 et S720 ou les étapes S710, S730, S740 et S750 sont mises en œuvre.

L'étape S710 de détermination de la présence d'un état en association avec cet instant *t_{REQ}* dans l'historique d'états *H* est mise en œuvre au cours de laquelle il est déterminé si un état en association avec cet instant *t_{REQ}* est enregistré dans l'historique d'états H. Si tel est le cas (étape S710, choix "Y"), une étape S720 de traitement des données de cet état de l'historique d'états H est mise en œuvre. Selon certains modes de mise en œuvre, les traitements mis en œuvre au cours de cette étape S720 sont similaires à ceux décrits en référence à l'étape S650 de traitement des données synchronisées.

En revanche, si l'historique d'états H ne comprend pas d'état en association avec l'instant *t_{REQ}* (étape S710, choix "N"), une étape S730 de génération de données en association avec l'instant *t_{REQ}* est mise en œuvre au cours de laquelle les données requises à l'instant *t_{REQ}* sont générées par le modèle de prédiction précédemment évoqué, en fonction d'au moins un des états de l'historique pour au moins un instant voisin de l'instant *t_{REQ}.* Dans certains modes de mise en œuvre, l'état de l'historique à l'instant qui précède immédiatement l'instant *t_{REQ}* et/ou l'état qui succède immédiatement l'instant *t_{REQ}* est pris en compte pour générer les données requises. Dans certains modes de mise en œuvre, les états de l'historique aux n instants qui précèdent immédiatement l'instant *t_{REQ}* et/ou qui succèdent immédiatement l'instant *t_{REQ}* sont pris en compte pour générer les données requises.

Dans certains modes de mise en œuvre, le procédé de synchronisation comprend en outre une étape S740 de stockage, dans l'historique H, des données générées au cours de l'étape S730 de génération de données en association avec l'instant *t_{REQ}.* Un tel stockage peut permettre d'éviter de solliciter le modèle de prédiction si ces données relatives à l'instant *t_{REQ}* sont de nouveau requises dans le futur,.

On note que cette étape peut être optionnelle dans certains modes de réalisation (de façon par exemple à limiter l'occupation mémoire de l'historique).

Enfin, dans certains modes de mise en œuvre, le procédé comprend une étape S750 de traitement des données générées au cours de l'étape S730 de génération de données en association avec l'instant *t_{REQ},* Selon certains modes de mise en œuvre, les traitements mis en œuvre au cours de cette étape S750 sont similaires à ceux décrits en référence à l'étape S650 de traitement des données synchronisées.

Si lors de l'étape S500 de comparaison de l'instant *t_{REQ}* avec l'instant courant *t_{CUR},* l'instant *t_{REQ}* correspond à un instant futur (étape S500, choix *"t_{REQ} > t_{CUR}*")*,* un message d'erreur, destiné à l'utilisateur ayant émis la requête reçue lors de l'étape S400 de réception d'une requête d'obtention de données, est émis dans certains modes de mise en œuvre. Dans d'autres modes de mise en œuvre, une prédiction à partir de l'historique peut être effectuée (étape S810) et une étape S820 de traitement des données de cette prédiction est mise en œuvre. Selon certains modes de mise en œuvre, les traitements mis en œuvre au cours de cette étape S820 sont similaires à ceux décrits en référence à l'étape S650 de traitement des données synchronisées.

Dans certains modes de mise en œuvre, une étape de filtrage (non représentée en Figure 4) est mise en œuvre préalablement aux étapes de traitement S650, S750 S720 et/ou S820.

Le terme "filtrage" (ou "sélection") est utilisé dans le cadre de requêtes d'accès à des bases de données Il s'agit en fait d'une analyse de la requête utilisateur, pour identifier les jumeaux numériques concernés par la synchronisation (ou les parties d'un jumeau numériques concernées). Dans la suite de la description, deux exemples illustratifs sont décrits : le premier exemple ("Exemple #1") traite d'une requête simple visant une synchronisation de l'ensemble d'un jumeau numérique, le second exemple (Exemple #2) est relatif à une requête qui concerne les éléments d'un jumeau dont un attribut ("température") est dans un état particulier (>19°C). Dans ce cas, on peut :
- soit synchroniser tous les éléments ayant l'attribut concerné ("température"), puis remonter des informations uniquement pour les éléments ayant un attribut dans l'état particulier (">19°C") (d'où le terme de filtrage) avant une étape de rendu décrite ci-après.
- soit identifier, via l'historique, les éléments dont l'attribut ("température") a cet état particulier (">19°C") (par exemple lors de l'étape S610, ou lors avant/lors de l'étape S730 et/ou de l'étape S810, soit alors de l'étape 500) et ensuite synchroniser ces jumeaux.

Synchroniser puis filtrer peut offrir des avantages en termes de fiabilité puisque l'on assure systématiquement de l'état courant de l'attribut. Filtrer puis synchroniser peut offrir des avantages en termes de rapidité (puisque seule une partie des jumeaux sera synchronisée). On peut par exemple choisir l'une ou l'autre de ces approches en fonction du temps écoulé depuis la dernière synchronisation des jumeaux concernés.

Lorsque le filtrage porte sur des données manquantes passées ou futures (c'est-à-dire lorsqu'il est appliqué préalablement aux étapes S750, S720 et/ou S820), une synchronisation avec le système physique n'est pas possible durant le traitement de la requête utilisateur.

Pour un état futur, il est donc requis d'utiliser essentiellement des états prédits par le modèle prédictif pour déterminer les éléments correspondants au filtre et pour répondre à la requête. Pour ne pas sur-solliciter la génération de données, la requête peut comporter un/des éléments d'identification du ou des systèmes pour lesquels il est nécessaire de prédire des valeurs.

### Exemples :

i) une requête portant un jumeau (ou une partie d'un jumeau représentatif d'un élément) identifié par son identifiant et un ou plusieurs attributs dans leur état futur. Dans ce cas, la génération des données manquantes peut être réalisée immédiatement puis le résultat de la requête est renvoyé à l'utilisateur ;
ii) une requête portant sur un ensemble de jumeaux (représentatifs de plusieurs éléments du système physique) identifiés par leurs identifiants respectifs et un ou plusieurs attributs dans leur état futur ;
iii) une requête portant sur un ensemble indéterminé de jumeaux (représentatifs de plusieurs éléments du système physique), et un ou plusieurs attributs dans leur état futur.

Dans les cas ii) et iii), une limite prédéterminée *max_n* du nombre de jumeaux (ou d'éléments ) peut être envisagée, en suivant par exemple la procédure suivante:
- une requête utilisateur portant sur un nombre inconnu de jumeaux est reçue ;
- un nombre de jumeaux (ou d'éléments) n correspondants au filtre est déterminé;
- si *n* < *max_n,* l'étape de prédiction des états manquants est mise en œuvre ;
- et si *n* > *max_n,* le procédé s'arrête et/ou un message d'erreur est transmis à destination de l'utilisateur.

Pour un état passé, si aucune donnée correspondant au filtre et à l'instant passé requêté n'est stockée, de nouvelles données peuvent être générées par le modèle prédictif. Dans ce cas les éléments décrits ci-dessus pour les états futurs sont repris.

### Exemples de requêtes de l'utilisateur

Les exemples qui suivent s'appuient sur le langage SQL, ainsi que sur le langage d'interrogation d'une base de données MongoDB. Il importe cependant de noter que d'autres langages pourraient être considérés.

Exemple #1: requête d'obtention de données à l'instant "2024-02-26T16:00:57.101Z" d'un jumeau identifié par son ID

Comme évoqué précédemment, : ce premier exemple ("Exemple #1") traite d'une requête concernant l'ensemble d'un jumeau numérique.

La requête SQL correspondante peut être exprimée comme suit :
SELECT * FROM DigitalTwin WHERE id == "90363aff-7eba-4b97-8a17-527907c939ca" and timestamp == "2024-02-26T16:00:57.101Z"

Et en utilisant le langage de requête MongoDB :

```
 {
 "id": "90363aff-7eba-4b97-8a17-527907c939ca",
 "timestamp": "2024-02-26T16:00:57.101Z"
 }
```

Dans cet exemple, toutes les propriétés du jumeau ayant l'identifiant "90363aff-7eba-4b97-8a17-527907c939ca" sont synchronisés.

Exemple #2 : requête d'obtention de données à l'instant "2024-02-26T16:00:57.101Z" avec filtrage d'une propriété (température> 19°C) :

Comme évoqué précédemment, ce second exemple (Exemple #2) est relatif à une requête qui concerne un ou plusieurs éléments dont un attribut ("température") est dans un état particulier (>19°C).

La requête SQL correspondante peut être exprimée comme suit :
SELECT * FROM DigitalTwin WHERE temperature > 19 and timestamp == "2024-02-26T16:00:57.101Z"

Et en utilisant le langage de requête MongoDB :

```
 {
 "temperature": { $gte: 19 },
 "timestamp": "2024-02-26T16:00:57.101Z"
 }
```

Selon certains modes de mise en œuvre, le module de synchronisation MOD_SYN peut commencer la synchronisation, mais sans limitation à une température supérieure à 19°C. En effet, la requête initialement reçue peut être décomposée, et lors d'une première étape, dans un premier temps, tous les jumeaux ayant une propriété "temperature" sont synchronisés.

Cette première étape est alors équivalente à la requête SQL suivante :
SELECT * FROM DigitalTwin WHERE temperature IS NOT NULL and timestamp == "2024-02-26T16:00:57.101Z"

Et en utilisant le langage de requête MongoDB :

```
 {
 "temperature": { $ne: null },
 "timestamp": "2024-02-26T16:00:57.101Z"
 }
```

Dans ce cas, tous les jumeaux ayant une propriété "température" sont synchronisés, et ce, même si la propriété "température" a une valeur inférieure ou égale à 19°C. Dans ce mode de mise en œuvre, la deuxième étape de filtrage sera alors par exemple mise en œuvre lors de l'étape S900 d'accès aux données.

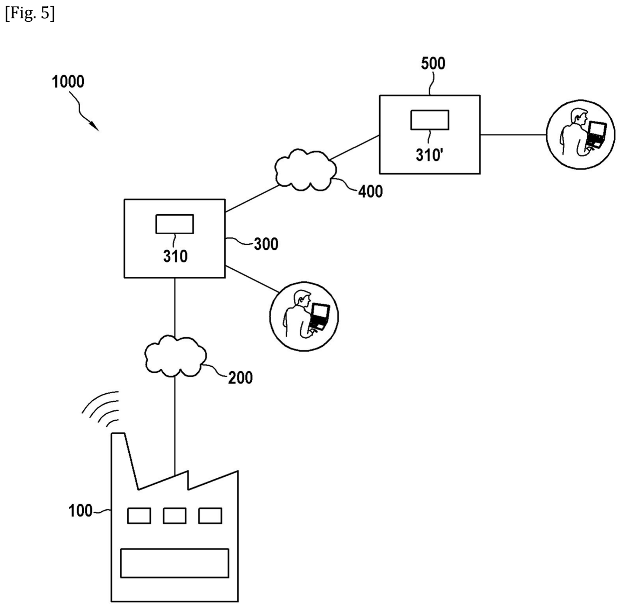

La figure 5 est une représentation d'un exemple d'environnement dans lequel l'invention est mise en œuvre.

Cette figure 5 diffère de la figure 1 en ce que le dispositif 300 de gestion de jumeaux numériques est connecté à un autre dispositif 500 de gestion de jumeaux numériques au travers du réseau de télécommunications 400. Cet autre dispositif 500 de gestion de jumeaux numériques comprend une réplique 310' du jumeau numérique 310 de l'usine 100 de fabrication de véhicule. Autrement dit, le jumeau numérique 310 est réparti entre plusieurs dispositifs de gestion de jumeaux numériques, ce qui permet donc à un utilisateur d'interagir avec le dispositif le plus proche, par exemple afin de réduire le temps d'accès aux données engendré par la distance physique entre l'utilisateur et le dispositif de gestion de jumeaux numériques.

Dans certains modes de mise en œuvre, le jumeau 310 du dispositif 300 le plus proche du système physique 100 est régulièrement synchronisé avec le système physique 100, par exemple à la fréquence initiale *f*₀, et le procédé selon l'invention est alors mis en œuvre par le dispositif 500 en charge du jumeau numérique 310'. Dans ce cas particulier, le jumeau numérique 310' correspond à une réplique du jumeau numérique 310 mais les deux jumeaux 310 et 310' ne sont pas synchronisés avec le système physique 100 en utilisant la même fréquence de synchronisation.

De manière plus précise, le dispositif 500 de gestion de jumeaux numérique met en œuvre les étapes suivantes :

- une pluralité de synchronisations d'au moins une portion du jumeau numérique 310' avec le jumeau numérique 310 mises en œuvre selon au moins une fréquence de synchronisation variable. Dans certains modes de mise en œuvre, cette étape comprend une réduction progressive de la fréquence de synchronisation du jumeau numérique 310' avec le jumeau numérique 310 tant que la précision effective du modèle de prédiction du jumeau numérique 310' est adaptée ;

- en réponse à une réception d'une requête d'obtention de données du système physique à un instant courant, une synchronisation d'au moins une partie du jumeau numérique 310' avec le jumeau numérique 310, et une réinitialisation de la fréquence de synchronisation de la au moins une portion du jumeau numérique 310' avec le jumeau numérique 310 à une valeur supérieure à une valeur courante de ladite fréquence de synchronisation.

## Revendications

1. Procédé de synchronisation d'un premier jumeau numérique (310) représentant au moins une partie d'un système physique (100), le procédé étant mis en œuvre par un dispositif (300) de gestion de jumeaux numériques et comprenant :
- une pluralité de synchronisations (S300) du premier jumeau numérique (310) avec le système physique (100), mises en œuvre selon au moins une fréquence de synchronisation variable ;
- en réponse à une réception d'une requête d'obtention de données du système physique à un instant courant (*t_{CUR}*), une synchronisation (S620) d'au moins une partie du premier jumeau numérique (310) avec le système physique (100); et une réinitialisation (S630) de la fréquence de synchronisation de la au moins une partie du premier jumeau numérique (310) à une valeur supérieure à une valeur courante de ladite fréquence de synchronisation.

2. Dispositif (300) de gestion de jumeaux numériques comportant un ou plusieurs processeurs ; et un support lisible par ordinateur non transitoire stockant des instructions qui, lorsqu'elles sont exécutées par le ou les processeurs, amènent le ou les processeurs à réaliser des opérations comprenant :
- effectuer une pluralité de synchronisations (S300) du premier jumeau numérique (310) avec le système physique (100), la pluralité de synchronisations (S300) étant mises en œuvre selon au moins une fréquence de synchronisation variable
- en réponse à une réception d'une requête d'obtention de données du système physique à un instant courant (*t_{CUR}*), synchroniser (S620) au moins une partie du premier jumeau numérique (310) avec le système physique (100) et réinitialiser (S630) la fréquence de synchronisation de la au moins une partie du premier jumeau numérique (310) à une valeur supérieure à une valeur courante de ladite fréquence de synchronisation.

3. Procédé de synchronisation selon la revendication 1, ou dispositif de synchronisation selon la revendication 2, où le premier jumeau numérique (310) comprend un modèle de prédiction, la fréquence de synchronisation étant progressivement réduite en fonction d'une précision effective du modèle de prédiction.

4. Procédé ou dispositif de synchronisation selon la revendication 3, où la fréquence de synchronisation est progressivement réduite tant que la précision effective du modèle de prédiction est adaptée.

5. Procédé de synchronisation selon l'une quelconque des revendications 1, 3 et 4, ou dispositif de synchronisation selon l'une quelconque des revendications 2 à 4, où seule une partie *P_{SYNC}* du premier jumeau numérique est synchronisée en réponse à la réception de la requête d'obtention de données, ladite partie *P_{SYNC}* étant synchronisée en fonction de la fréquence réinitialisée *F_{INIT},* ledit jumeau numérique étant synchronisé à l'exclusion de la partie *P_{SYNC}* en fonction de la valeur courante de la fréquence de synchronisation.

6. Procédé de synchronisation selon l'une quelconque des revendications 1 ou 3 à 5, ou dispositif de synchronisation selon l'une quelconque des revendications 2 à 5, où le premier jumeau numérique (310) comprend un modèle de prédiction, le procédé comprenant, respectivement le dispositif étant configuré pour :
- générer (S100) un historique (H) d'états du système physique (100), chaque état de l'historique étant associé à un instant t et incluant des valeurs de différentes variables dynamiques du système physique (100) audit instant t ; et,
- entraîner (S200) le modèle de prédiction en utilisant l'historique d'états comme données d'entraînement.

7. Procédé ou dispositif de synchronisation selon la revendication 6, le procédé comprenant, respectivement le dispositif étant configuré pour :
- sur réception d'une requête d'obtention de données du système physique (100) relatives à un instant antérieur (*t_{PASS}*) à l'instant courant (*t_{CUR}*), prédire (S730), par le modèle de prédiction, des données associées à l'instant antérieur (*t_{PASS}*) en fonction d'au moins un état de l'historique (H) lorsque l'historique (H) d'états ne comprend pas d'état associé à l'instant antérieur (*t_{PASS}*).

8. Procédé ou dispositif de synchronisation selon la revendication 7, le procédé comprenant, respectivement le dispositif étant configuré pour enregistrer des données prédites à l'instant antérieur *t_{PASS}* dans l'historique (H) d'états du système physique (100).

9. Procédé de synchronisation selon l'une quelconque des revendication 1 ou 3 à 8 ou dispositif de synchronisation selon l'une quelconque des revendications 2 à 8, le procédé comprenant, respectivement le dispositif étant configuré pour déterminer (S610) ladite au moins une partie du premier jumeau numérique (310) à synchroniser avec le système physique (100), en fonction de la requête d'obtention de données.

10. Procédé de synchronisation selon l'une quelconque des revendication 1 ou 3 à 9 ou dispositif de synchronisation selon l'une quelconque des revendications 2 à 9, le procédé comprenant, respectivement le dispositif étant configuré pour stocker (S640), dans l'historique (H) d'états, des données issues de la synchronisation de la au moins une partie du premier jumeau numérique (310) avec le système physique (100) en association avec l'instant courant *t_{CUR}.*

11. Procédé de synchronisation selon l'une quelconque des revendication 1 ou 3 à 10 ou dispositif de synchronisation selon l'une quelconque des revendications 2 à 10, le procédé comprenant, respectivement le dispositif étant configuré pour filtrer des données issues de la synchronisation de la au moins une partie du premier jumeau numérique (310) avec le système physique (100).

12. Procédé ou dispositif de synchronisation selon la revendication 11, le procédé comprenant, respectivement le dispositif étant configuré pour lors dudit filtrage, générer des données manquantes par un modèle de prédiction dudit jumeau numérique.

13. Procédé de synchronisation selon l'une quelconque des revendication 1 ou 3 à 12 ou dispositif de synchronisation selon l'une quelconque des revendications 2 à 12, la pluralité de synchronisations étant réalisée directement entre le premier jumeau numérique et le système physique (100), ou via un second jumeau numérique représentant au moins partiellement le système physique (100).

14. Programme d'ordinateur (PROG) comportant des instructions pour la mise en œuvre d'un procédé de synchronisation selon l'une quelconque des revendications 1 et 3 à 13, lorsque ledit programme est exécuté par un processeur.

15. Support d'enregistrement lisible par un ordinateur sur lequel est enregistré un programme d'ordinateur selon la revendication 14.
